# EUROPEAN PATENT SPECIFICATION

(11) **EP 3 949 328 B1**
(45) Date of publication and mention of the grant of the patent: **18.02.2026**
(21) Application number: 20721075.8
(22) Date of filing: 05.04.2020
(51) Int. Cl.: H04L 9/40, H04W 12/102, H04W 12/00, H04W 12/069, H04W 12/60, H04W 84/18

(54) **SYSTEMS AND METHODS FOR REMOTE CERTIFICATION OF NETWORK DEVICES**
SYSTEME UND VERFAHREN ZUR FERTIFIZIERUNG VON NETZWERKGERÄTEN
SYSTÈMES ET PROCÉDÉS POUR UNE CERTIFICATION À DISTANCE DE DISPOSITIFS DE RÉSEAU

(30) Priority: 05.04.2019 US 201962830172 P
(43) Date of publication of application: 09.02.2022
(73) Proprietor: Cisco Technology, Inc., San Jose, California 95134-1706 (US); Fraunhofer Institute for Secure Information Technology, 64295 Darmstadt (DE)
(72) Inventor: BROCKNERS, Frank, 50823 Köln (DE); VOIT, Eric, Bethesda, Maryland 20817 (US); SALAM, Samer, Beirut (LB); BHANDARI, Shwetha Subray, Bangalore 560043 (IN); BIRKHOLTZ, Henk, 28219 Bremen (DE); FUCHS, Andreas, 64283 Darmstadt (DE)
(74) Representative: Schenk, Markus
(86) International application number: PCT/US2020/026781
(87) International publication number: WO 2020/206398

(56) References cited:
- WO-A1-2016/085517
- US-A1- 2017 222 878
- FUCHS H BIRKHOLZ FRAUNHOFER SIT I MCDONALD HIGH NORTH INC C BORMANN UNIVERSITAET BREMEN TZI A: "Time-Based Uni-Directional Attestation; draft-birkholz-i2nsf-tuda-04.txt", TIME-BASED UNI-DIRECTIONAL ATTESTATION; DRAFT-BIRKHOLZ-I2NSF-TUDA-04.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 24 October 2018 (2018-10-24), pages 1 - 68, XP015129643

## Description

### TECHNICAL FIELD

The present disclosure generally relates to the field of computer networking, and more particularly, to systems and methods for validating remote self-certification of network devices.

### BACKGROUND

Certification/verification programs like the one of the Linux Foundation Networking Fund (Linux Foundation) used for Open Networking Automation Platform (ONAP) and Open Platform for Network Function Virtualization (OPNFV) offer self-certification of products. For example, a vendor uses a set of test tools/a test suite to test one or more products. The results of these tests are submitted to a verifier (e.g. Open Platform for Network Function Virtualization (OPNFV) Verification Program (OVP) managed by Linux Foundation) and in case the results match the criteria, Linux Foundation issues a stamp of approval (which is just a sticker, i.e. isn't an electronic certificate which anyone could verify).

Currently, the verifier (e.g. OVP managed by the Linux Foundation), isn't able to verify whether the verification has been performed on untampered hardware and software - which is a pre-requisite for proper verification of test results. Without such verification, the underlying test system could be modified to enable the system under test deliver the required/desired results. In other words, by only receiving the test results, the verifier is unable to assess whether the test was in fact executed on the hardware/software as claimed or that the test results were fabricated.

The document WO 2016/085517 A1 discloses verifying network elements. In one example, a computing device may: receive, from a client device, a request for attestation of a back-end network, the request including back-end configuration requirements; obtain, from a network controller that controls the back-end network, a controller configuration that specifies each network element included in the back-end network; provide each network element included in the back-end network with a request for attestation of a network element configuration of the network element; receive, from each network element, response data that specifies the network element configuration of the network element; verify that the response data received from each network element meets the back-end configuration requirements included in the request for attestation of the back-end network; and provide the client device with data verifying that the back-end network meets the back-end configuration requirements.

Document US 2017/222878 A1 discloses verifying a network configuration. In one example, a computing device may: receive, from a verifier, a request for attestation of a current network configuration of the computing device; identify network configuration rules, each network configuration rule specifying an action to be taken by the computing device in response to receiving a particular type of network traffic; generate, for each network configuration rule, a rule abstraction that represents the network configuration rule; provide data representing each rule abstraction to the trusted component; receive, from the trusted component, response data comprising i) data representing each rule abstraction, and ii) a digital signature; and provide the response data to the verifier as attestation proof of the current network configuration of the computing device.

The document "Time-Based Uni-Directional Attestation; draft-birkholz-i2nsf-tuda-04" of A Fuchs H Birkholz, Fraunhofer SIT I McDonald High North I C Bormann Universitaet Bremen TZI discloses a method and bindings used to conduct time-based uni-directional attestation between distinguishable endpoints over a network.

### BRIEF DESCRIPTION OF THE FIGURES

To provide a more complete understanding of the present disclosure and features and advantages thereof, reference is made to the following description, taken in conjunction with the accompanying drawings, in which:
FIG.1 is a block diagram of an example of a networking environment in accordance with some implementations.
FIG.2 is a block diagram of an example of a networking environment in accordance with some implementations.
FIG.3 is a block diagram of an example of a networking environment in accordance with some implementations.
FIG.4 is a block diagram of controller orchestrated attestation based routing in accordance with some implementations;
FIG.5 describes a process for ensuring trustworthiness of remote certifications for various network hardware and software components in accordance with various embodiments; and
FIGs.6A and 6B illustrate examples of systems in accordance with some embodiments.

### DETAILED DESCRIPTION

Various embodiments of the disclosure are discussed in detail below. While specific implementations are discussed, it should be understood that this is done for illustration purposes only. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

Aspects of the invention are set out in the independent claims and preferred features are set out in the dependent claims. Features of one aspect may be applied to each aspect alone or in combination with other aspects.

Example embodiments described herein provide systems and methods for any given network component (hardware or software) to receive a set of defined base software and test suite(s) that includes a trust module. The trust module may produce attestation information including test system setup, the tested component's test results (e.g., hash measurements) and the test results. The attestation information may then be provided to a verifier (e.g., a network node attempting to communicate with the node on which the trust module is performing the attestation) to indicate and prove that the claimed tested component was in fact tested against identified test suite(s) and passed the required test to receive a certification.

In one aspect of the present disclosure, a method includes receiving, at a network node, computer-executable code for self-certifying the network node or at least a component thereof; executing, at the network node, the computer-executable code to obtain self-certification results; updating, at a trust module of the network node, an event log with the self-certification results; performing, by the network node, an attestation of the event log to generate a digital proof of authenticity of the network node; and sending, by the network node, the digital proof to a requesting node, the digital proof of authenticity enabling the requesting node to verify the network node prior to communication with the network node.

In one aspect of the present disclosure, a system includes one or more processors; and at least one computer-readable storage medium having stored therein instructions which, when executed by the one or more processors, cause the one or more processors to receive computer-executable code for self-certifying the network node or at least a component thereof; execute the computer-executable code to obtain self-certification results; update, at a trust module of the network node, an event log with the self-certification results; perform an attestation of the event log to generate a digital proof of authenticity of the network node; and send the digital proof to a requesting node, the digital proof of authenticity enabling the requesting node to verify the network node prior to communication with the network node.

In one aspect of the present disclosure, a non-transitory computer-readable storage medium includes instructions stored therein which, when executed by at least one processor, cause the at least one processor to receive computer-executable code for self-certifying the network node or at least a component thereof; execute the computer-executable code to obtain self-certification results; update, at a trust module of the network node, an event log with the self-certification results; perform an attestation of the event log to generate a digital proof of authenticity of the network node; and send the digital proof to a requesting node, the digital proof of authenticity enabling the requesting node to verify the network node prior to communication with the network node.

The foregoing, together with other features and embodiments, will become more apparent upon referring to the following specification, claims, and accompanying drawings.

### DETAILED DESCRIPTION

The disclosed technology addresses the need in the art for verifying that attestation information indicative of trustworthiness of a piece of network hardware or software was in fact obtained by running a test suite on the same piece of network hardware or software. This verification eliminates possibilities of unauthorized tampering of the underlying hardware/software to deliver the results needed for obtaining certification without actually running the hardware/software against the required test, which in turn results in trustworthiness of obtained remote certifications. This process may be referred to as systems and methods for verifying self-certifications for various network hardware and software components implemented as network nodes. The term self-certification may also be referred to as self-verification.

The disclosure now turns to an initial discussion of example concepts and technologies for providing verifiable proof of integrity of network nodes traversed by packets before describing concepts and example embodiments related to ensuring trustworthiness of remote certifications for various network hardware and software components.

A computer network can include different nodes (e.g., network devices, client devices, sensors, servers, physical and/or virtual hosts providing services and any other computing devices) interconnected by communication links and segments for sending data between end nodes. Many types of networks are available, including, for example, local area networks (LANs), wide area networks (WANs), software-defined networks (SDNs), wireless networks, core networks, cloud networks, the Internet, etc. When data traffic is transmitted through one or more networks, the data traffic typically traverses a number of nodes that route the traffic from a source node to a destination node.

While having numerous nodes can increase network connectivity and performance, it also increases security risks as each node that a packet traverses introduces a risk of unauthorized data access and manipulation. For example, when a packet traverses a node, there is a security risk that is introduced which can result from the node being potentially compromised (e.g., hacked, manipulated, captured, etc.). As a result, compliance, security, and audit procedures can be implemented to verify that network users, devices, entities and their associated network traffic comply with specific business and/or security policies.

When sensitive information is transmitted through nodes in a network, such as in battlefield, banking settings, and healthcare settings, such traffic should be sent through uncompromised nodes to prevent access to, leakage of, or tampering with the data and sensitive information carried by that traffic. If an attacker gains access to a device via some exploit, previous protection and encryption approaches for network interfaces are generally ineffective at mitigating or addressing such unauthorized access and resulting damage.

Proving that network traffic complies with specific policies can involve proving in a secure way that the traffic has traversed a well-defined set of network nodes (e.g., firewalls, switches, routers, etc.) and that such network nodes have not been modified or compromised. This can help ensure that the network nodes have performed their expected or intended actions (e.g., packet processing, security or policy compliance verification, routing, etc.) on the packet and that the packet has traversed the network nodes.

Some security approaches can aim at removing any implied trust in the network used for connecting applications hosted on devices to cloud or enterprise hosted services. Moreover, some security approaches can be implemented to verify the trustworthiness (e.g., the integrity, identity, state, etc.) of the network and/or nodes traversed by packets. In some cases, certain verification checks can be implemented to validate or verify that traffic has traversed a specific set of nodes and that such nodes are trusted and uncompromised. In some examples, certain Trusted Platform Module (TPM), attestation, or proof of integrity approaches can be implemented to verify or validate the trustworthiness of a node in a network.

Attestation, as further described below, can also be used to verify the integrity of a node. In some cases, the approaches herein can integrate both to offer a secure approach that allows network users or entities to verify that traffic has traversed a defined set of nodes and that such nodes have not been compromised.

In some cases, TPM can be implemented to collect and report the identity of hardware and software components in a platform to establish trust for that platform. A TPM used in a computing system can report on the hardware and software of the system in a manner that allows verification of expected behavior associated with that system and, from such expected behavior, establishment of trust. The TPM can be a system component containing state that is separate from the host system on which the TPM reports identity and/or other information. TPMs can be implemented on physical resources (indirectly or directly) of the host system. In some examples, a TPM component can have a processor and memory such as RAM, ROM and/or flash memory. In other implementations of a TPM, a host processor can run TPM code while the processor is in a particular execution mode. Parts of system memory can be partitioned by hardware to ensure that memory used by the TPM is not accessible by the host processor unless the host processor is in the particular execution mode.

In some cases, trusted computing (TC) implementations, such as TPM, can rely on Roots of Trust. Roots of Trust can be system elements that should be trustworthy because misbehavior by such system elements may not be detectable. A set of roots can provide a minimum functionality that can sufficiently describe characteristics that affect a platform's trustworthiness. In some cases, determining if a Root of Trust is behaving properly may not be possible; however, it may be possible to determine how roots are implemented. For example, certificates can provide assurances that the root has been implemented in a way that renders it trustworthy.

To illustrate, a certificate may identify the manufacturer and evaluated assurance level (EAL) of a TPM. Such certification can provide a level of confidence in the Roots of Trust used in the TPM. Moreover, a certificate from a platform manufacturer may provide assurance that the TPM was properly installed on a system that is compliant with specific requirements so the Root of Trust provided by the platform may be trusted. Some implementations can rely on three Roots of Trust in a trusted platform, including Root of Trust for Measurement (RTM), Root of Trust for Storage (RTS), and Root of Trust for Reporting (RTR).

The RTM can send integrity information, such as integrity measurements, to the RTS. Generally, the RTM can be a processor controlled by a Core Root of Trust for Measurement (CRTM). The CRTM is the first set of instructions executed when a new chain of trust is established. When a system is reset, the processor (e.g., RTM) can execute the CRTM, which can then send values that indicate its identity to the RTS. Thus, in some cases, the starting point for a chain of trust can be established in this manner.

As previously noted, the TPM memory can be shielded from access by an entity other than the TPM. Since the TPM can be trusted to prevent unauthorized access to its memory, the TPM can act as an RTS. Moreover, the RTR can report on the contents of the RTS. An RTR report can be a digitally signed digest of the contents of one or more values in a TPM.

Attestation is another example trusted computing approach that can be used to verify the integrity of a node. Attestation can be applied to a node, such as a router or switch, to review logs from connected devices, such as Layer 1 (L1) or Layer (L2) connected devices and maintain these logs in trusted storage. These logs can be protected by embedding a private key into every trust anchor produced for a hardware device and publishing the device's public key as a certificate to adjacent devices. This peering device can then push log updates from trusted storage periodically and/or on some log entry event. Reviewing any provided signed logs can provide an understanding of the current trustable state of a peer device. Moreover, by looking back at the set of transactions which have occurred since boot time, a determination can be made regarding the trustworthiness of the information which that peer device is asserting.

In some examples, metadata elements containing security measurements or evidence, can be used to provide verifiable evidence of device trustworthiness (e.g., integrity, state, etc.). The metadata elements can include applicable data for verifying trustworthiness of a device and be provided through an applicable technique for verifying device trustworthiness. For example, the metadata elements can be provided as part of a canary stamp associated with the device. A canary stamp can indicate or otherwise include a signed measurement associated with a device for verifying trustworthiness of the device. In turn, such measurements can be referred to as canary stamps because each signed measurement is like a stamp proving its authenticity, and like a canary in a coal mine that indicates an early sign of trouble. Such verifiable evidence can be appended or included in packets transmitted by nodes on a network. The metadata elements can thus be used to evaluate the trustworthiness of a node(s) and react accordingly. For example, a device or entity can review metadata element associated with a node to determine that the node should not be trusted and adjust a network policy to mitigate possible damage.

In some implementations, dedicated cryptoprocessors, such as a processor in TPM platform, can take measurements to attest to the trustworthiness (e.g., identity, integrity, etc.) of a node and its environment (e.g., software, hardware, operating system, running binaries, firmware, etc.). These measurements include evidence that the node is in a safe state. In some cases, these measurements can be provided through canary stamps, as previously described. However, a receiver of such evidence should be able to certify that the evidence is fresh, as the evidence can become stale thereby potentially reducing its effectiveness in reflecting the current trustworthiness of a node. For example, without ensuring freshness of such evidence, an attacker has an opening to inject previously recorded measurements and asserting what is replayed as being current.

Some approaches can detect the replaying of old evidence via a "nonce". A nonce is an arbitrary number that can be used to introduce randomness. In some instances, a nonce can be used just once in a cryptographic communication. Further, a nonce can be passed into a TPM and/or incorporated into a canary stamp/metadata. In some cases, a result provided by the TPM can include a signature based on the nonce. Since the nonce can be grounded in a transactional challenge/response interaction model, in some cases the nonce may be less effective with unidirectional communications originating from an attesting device. For example, a nonce may less effective with an asynchronous push, multicast, or broadcast message.

However, there are numerous use cases where a platform assessing whether its peers are trustworthy is advantageous. Being able to perform a unidirectional attestation using an asynchronous push, multicast, or broadcast message in conjunction with trusted binaries opens many possibilities for platforms to assess whether their peers are trustworthy. Detection of invalid attestations can trigger alarms or events, reduction of network access from a suspect device, or can become a part of Admission Control (e.g., IEEE 802.1X). Some platforms can be configured to support the unidirectional attestation mechanism.

Other freshness approaches can be based on trusted computing capabilities, such as TPM. For example, a token can be generated which allows external entities to validate freshness of asserted data based on the state of internal counters within the TPM. This token can be used to detect replay attacks, and provide attestation for asynchronous push, multicast, and broadcast messages.

Various of the foregoing approaches can be combined with TPM-integrated capabilities aimed at verifying that valid compute components, such as binary processes, are running on a node. These capabilities can include, for example, Trusted Execution Environments (TEE) which provide runtime malware protections, Authenticated Code Modules (ACM) which ensure that only digitally-signed code modules can be loaded into a processor, and the like. These technologies can validate that a processor is running known software with a valid chain of binary signatures.

In some cases, metadata elements, e.g. canary stamps, and tokens can be created by extracting current counters (e.g., clock, reset, restart) from a node's TPM, and incorporating such counters and security measures taken from the node into a packet. In some examples, the current counters and/or security measures can be hashed with information within an external TPM. The metadata elements and tokens can thereby provide a non-spoofable token or metadata element, which can bind continuously incrementing counters on an attestee with a known external state. Any resetting of the TPM counters is visible in any subsequent TPM queries, and any restarting of a platform is also exposed in subsequent TPM queries. Within these bounds of reset and restart, the TPM's time ticks counter continuously increments. Therefore, any push of attestee TPM information which includes these counters can be determined to have occurred subsequent to any previously-received measurement. Also, if the reset and restart counters have not changed, the incremental time since any previous measurement can also be known.

In some cases, a large amount of information that should be trusted by network peers may not be contained within the TPM's Program Configuration Registers (PCR). As a result, indirect methods of validating that a node has not been compromised can be applied.

The receipt of the metadata elements, e.g. canary stamps, and/or tokens can mean that a receiver should have the option of verifying the information. In many cases, such verification can be performed without the need of supplementary evidence being sent with the canary stamp. Moreover, in non-controller based or centralized implementations, the verification steps do not have to occur at the receiver.

In some integrity verification implementations, a controller or device can implement an integrity verification application. The integrity verification application can be designed to recognize change events and evaluate known good values, which allow evaluation of a boot-integrity stamp and a running process binary signature stamp based on, for example, TPM counters, timestamps, nonces, and/or time tokens. On any discrepancy, a controller or centralized device can isolate a compromised node from its network peers by shutting down the interfaces of the node.

In some examples, the metadata elements, e.g. canary stamps, and/or verifications for integrity can be implemented, such as a measured-boot stamp (e.g., SHA1 hash over PCRs 0-7), a verified-boot stamp (e.g., which can verify that only recognized binaries were executed when booting), a process-stamp (e.g., root-of-trust validated through a process which is asserting a particular protocol or protocols), a file-system stamp (e.g., all files within a vendor determined set of directories), a log-integrity stamp (e.g., used to augment existing integrity analytics and forensics), a configuration stamp (e.g., State of the current device configuration), etc. Some implementations can achieve all or some of these stamps, depending on the implementation. Moreover, in some implementations, all or some of these stamps can be implemented or achieved using a single or multiple stamps.

As previously explained, TPM provides methods for collecting and reporting the identity of hardware and software components in a platform to establish trust for that platform. TPM functionality can be embedded in a variety of devices including mobile phones, personal computers, network nodes (e.g., switches, routers, firewalls, servers, network appliances, etc.), and/or any other computing devices. Further, attestation can describe how the TPM can be used as a hardware root of trust and offer proof of integrity of a node. Such integrity can include hardware integrity, software integrity (e.g., micro loader, firmware, boot loader, kernel, operating system, binaries, files, etc.), and runtime integrity.

In some cases, TPM and attestation can be implemented as described herein to provide proof of integrity. In some examples, metadata elements and tokens containing or reflecting security measures are used as previously mentioned to validate the integrity of a node and perform continuous evaluation of node integrity.

Various strategies can be implemented for transporting the metadata elements and tokens in a packet. In some cases, the metadata elements and tokens can be carried within an In-Situ (or in-band) Operations, Administration and Management (IOAM) data field.

In some implementations, the metadata elements and tokens can be carried with IOAM trace data. For example, a canary stamp can be carried as part of an IOAM data field in a variety of encapsulation protocols such as, for example and without limitation, IPv4, IPv6, NSH (Network Service Header), etc. In some cases, the canary stamp can be carried in an IOAM data field as an IOAM Trace option data element (e.g., with an IOAM Trace type for node integrity canary stamp). A metadata element, token, or digest, e.g. canary stamp digest, can be added in the IOAM trace option of a packet by each node that forwards the packet.

When the packet reaches a node (e.g., the destination node and/or an intermediate node) that removes IOAM metadata (e.g., an IOAM decapsulating node), the validity of the metadata element and/or token in the packet can be verified to determine that the packet traversed uncompromised nodes. In some examples, since canary stamps are time bound, the packet trace timestamps defined in IOAM can be used to validate the canary stamp in the time window the packet traversed that node.

Verification can be performed without placing a large transactional load on the verifier or a device, such as a controller, that will ultimately validate the security measurements associated with the metadata elements or tokens. This is because the measurement values can often change infrequently. The verifier may only need to validate a metadata element and/or token carried within an IOAM data trace whenever the associated security measurements associated change (e.g., a verifier may only need to check with a controller whenever it sees a node's TPM extends a PCR value which was not previously confirmed by the verifier).

In some cases, when only the time ticks within a signed metadata element increases, only the signature of the metadata element is validated. To do this, the verifier may use the public key of any node which can place a metadata element. Such signature validation can be done without using a controller to verify the measurements.

In some examples, one or more strategies can be implemented to optimize metadata element validation. For example, metadata elements, e.g. canary stamps, can detect attempts of a replay attack by embedding a nonce as well as TPM or TPM2 counters (e.g., clock, reset, restart). In some cases, this nonce can be part of the metadata elements and different from the PPN described above.

The nonce is relevant to a receiver as the interval from the nonce's creation time to the first stamp received by the verifier can define the interval of freshness (e.g., the measurement is no older than this interval of freshness). From there, the TPM2 time ticks counter can be used to maintain that initial gap of freshness even without the delivery of a new nonce.

In some implementations, to optimize metadata element or token validation across nodes, the following approaches can be implemented to deliver synchronization information from a central component to each node and the verifier. For example, a central server can broadcast or multicast centralized nonce values (e.g., tracked random numbers). Each node can pick up the latest nonce and use it to attest a value. A verifier can know the freshness of a metadata element or token it receives from each node. This freshness can be the delta in time since that particular nonce was issued. Subsequent attestations can use the incrementing time ticks to prove freshness from that initial time gap. In some cases, the issuing of new nonces can reset the time gap to a potentially shorter interval.

Moreover, in some cases, each node can embed attested time within its metadata element. To get attested time, a TUDA (Time-Based Uni-Directional Attestation) scheme such as the TUDA scheme described in **https://tools.ietf.org/html/draft-birkholz-rats-tuda-02** can be used. This can result in the availability of both the attested time at a node, as well as the value of the TPM2 counters at this node when a TUDA time-synchronization token was created. This can eliminate the use of a central nonce authority, but can increase the size of the metadata element as the nonce can be replaced by the TUDA time-synchronization token. This approach may also implement a central timestamp authority as per TUDA. In some examples, for each hop, a canary stamp digest value can be: IOAM canary stamp digest new value = Digest of (IOAM canary stamp digest old value ∥ hash(canary stamp of the node ∥ TUDA time-synchronization token of the node)).

This approach can provide numerous benefits. For example and without limitation, with this approach, a verifier can limit the number of verifications by verifying the signature of a hop's time-synchronization token only when it changes. Moreover, with this approach, there may not be a time gap nonce changeover freshness when a first measurement is received. Further, in some cases, this approach can be implemented without also carrying a PPN or without synchronizing a nonce across nodes as previously described.

Further, an attestor, e.g. a node or a verifier, can use random numbers, otherwise pseudo-random numbers, created by peers and/or the attestor to generate and verify attestation information. Specifically, the attestor can accumulate random numbers from one or more layer 2 peers. The random numbers can be accumulated from the peers over a specific amount of time, e.g. a short duration of time. In turn, the random numbers can be combined into a number through an applicable technique, e.g. a Bloom filter. This number can serve as a nonce for a cryptoprocessor for generating a result. As follows, the layer 2 peers, potentially including the attestor, can use the result created by the cryptoprocessor, to verify/validate that their corresponding provided random number was used in generating the nonce ultimately used by the cryptoprocessor to create the result. In turn, the layer 2 peers, potentially including the attestor, can generate verified attestation information based on the random numbers generated by the peers, the nonce created from the random numbers, and/or the result created by the cryptoprocessor from the nonce.

Certain previous systems rely on the freshness (e.g., the recency) of measurements of a node in order to verify the security (e.g., trustworthiness) of the node. This is problematic because the reliability and accuracy of the verification is proportional to the frequency with which measurements are taken. Accordingly, a high utilization of network resources corresponds to a high reliability system, and vice versa. Another problem with a freshness-based system is that an attacker can inject previously recorded measurements into the node being verified (e.g., after gaining root access) in order to give the false appearance that the node has not been compromised. By contrast, various implementations disclosed herein verify the security (e.g., trustworthiness) of a node by comparing trusted information against corresponding information obtained from the node. In this way, verification proceeds irrespective of the freshness of information at the node. Moreover, utilization of the trusted information guards against the event where an attacker has changed information at the node.

Certain other previous systems provide a transactional process between the node making the verification request and the measurement device. For example, the requesting node provides a random number (e.g., a nonce) to the measurement device, which provides a signature across the response, including the returned random number itself. This indicates that the information is not being replayed from a time before the random number was available to the measurement device. Such a dependency of the requesting node for each signed response is problematic because the system is grounded in a transactional challenge and/or response interaction model. In other words, this system does not support unidirectional verification communications originating from the requesting node, such as an asynchronous push, multicast, broadcast message, and/or the like. By contrast, the attestation based routing disclosed herein supports these types of communications.

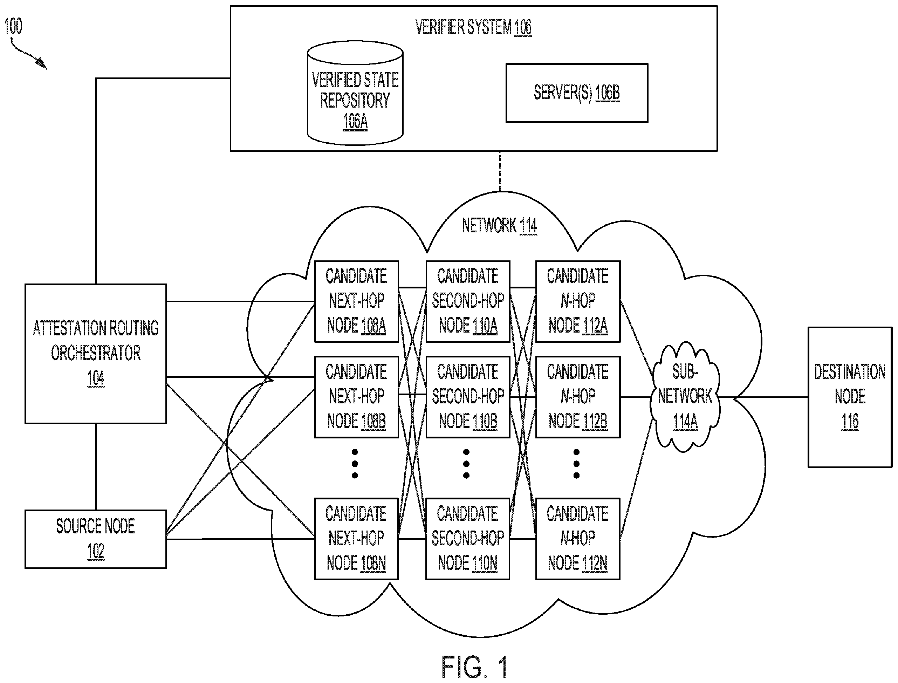

FIG.1 is a block diagram of an example of a networking environment 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the first example of the networking environment 100 includes a network 114 that includes a sub-network 114A. In some implementations, the sub-network 114a corresponds to a local area network (LAN) or virtual local area network (VLAN). In some implementations, the sub-network 114A corresponds to a wide area network (WAN), such as the Internet. In some implementations, the sub-network 114A includes a combination of nodes included within a LAN, VLAN, and/or WAN.

The networking environment 100 further includes a source node 102. The source node 102 corresponds to a networking device (e.g., switch, router, gateway, etc.) associated with a data packet that is destined for a destination node 116. The source node 102 is coupled to a plurality of candidate next-hop nodes 108A-108N. Each of the plurality of candidate next-hop nodes 108A-108N is included within a respective route between the source node 102 and the destination node 116. Moreover, as illustrated in FIG.1, each of the plurality of candidate next-hop nodes 1081-108N is connected to one or more of candidate second hop nodes 110A-110N. Each of candidate second hop nodes 110A-110N is connected to one or more of third hop nodes (not shown) and so on until each candidate N-1^{th} hop node is connected to one or more candidate N^{th} hope nodes 112A-112N. N can be any integer greater than or equal to 2. One of ordinary skill in the art will appreciate that, in various implementations, each of the plurality of candidate next-hop nodes 108A-108N is connected to a subset of the candidate second hop nodes 110A-110N and so forth. In one example, there may only be the candidate next hop nodes 108A-108N without candidate second to N^{th} hop nodes.

The networking environment 100 further includes an attestation routing orchestrator 104. As with the source node 102, the attestation routing orchestrator 104 is coupled to the plurality of candidate next-hop nodes 108A-108N. In various implementations, the attestation routing orchestrator 104 obtains, according to a predefined protocol, a first plurality of attestation vectors from the candidate next-hop nodes 108A-108N. In some implementations, the attestation routing orchestrator 104 further obtains additional information from candidate second-hop nodes 110A-110N and utilizes the additional information in selecting the particular candidate next-hop node. Although not illustrated in FIG.1, in some implementations, the attestation routing orchestrator 104 further obtains additional information from nodes that are more than two hops away (e.g., candidate third hop nodes, candidate fourth hop nodes, etc.).

The attestation routing orchestrator 104 is further coupled to a trusted system 106 (verifier system 106). In various implementations, the attestation routing orchestrator 104 obtains a trusted image vector from the trusted system 106. The trusted system 106 includes a verified image repository 106A and a server 106B. In some implementations, the trusted system 106 includes one or more trusted image vectors that are known with a high degree of confidence to have not been compromised (e.g., hacked, attacked, improperly accessed, etc.). For example, in some implementations, the trusted system 106 is part of a stub network.

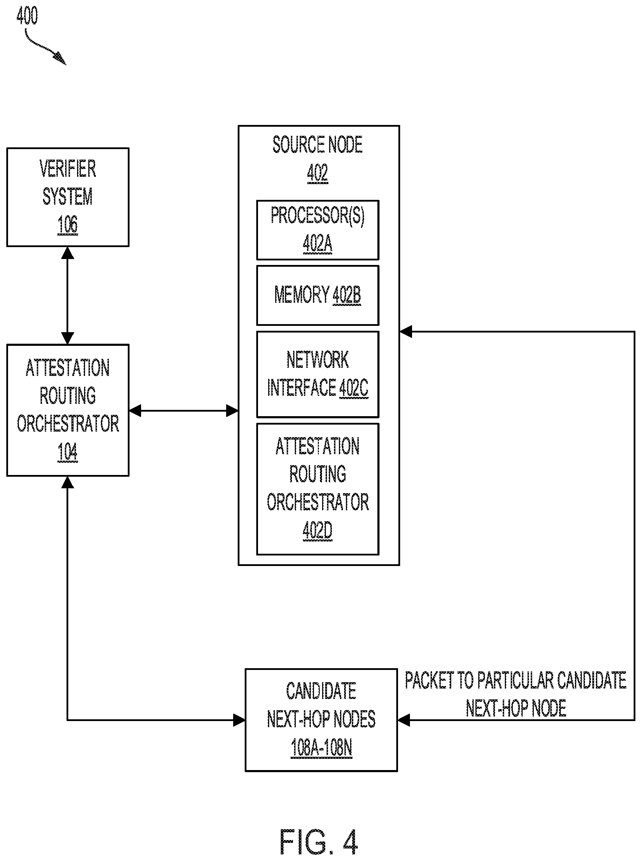

As will be described in great detail with reference to FIG.4, the attestation routing orchestrator 104 selects, and directs a data packet to, a particular candidate next-hop node of the plurality of candidate next-hop nodes 108A-108N based on the trusted image vector and the first plurality of attestation vectors. Moreover, the attestation routing orchestrator 104 directs the data packet destined for the destination node 116 to the particular candidate next-hop node.

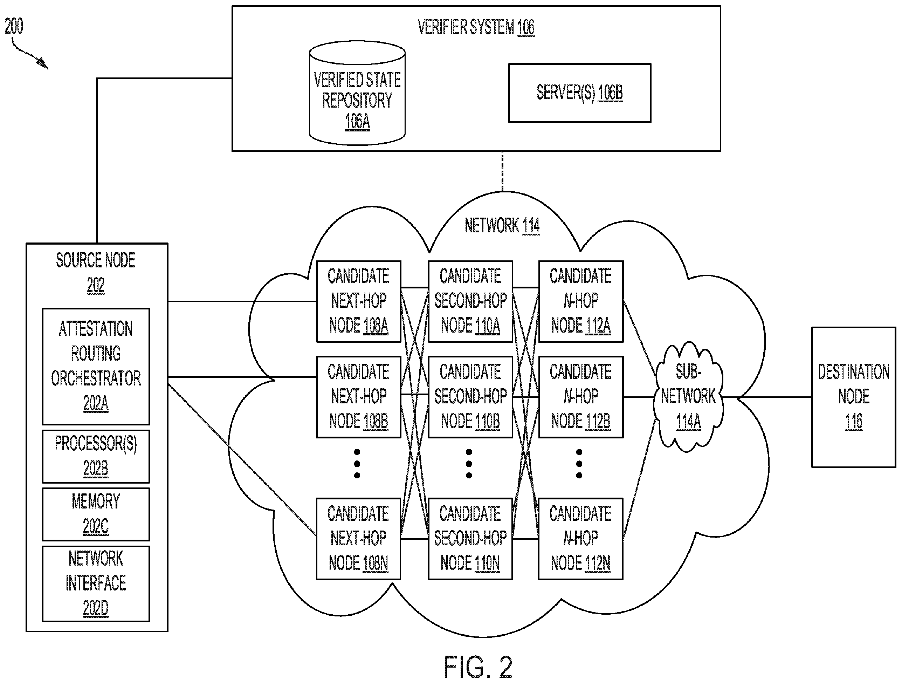

FIG.2 is a block diagram of an example of a networking environment 200 in accordance with some implementations. Notably, in contrast to the networking environment 100 illustrated in FIG.1, the networking environment 200 includes a source node 202 that includes an attestation routing orchestrator 202A. In various implementations, the attestation routing orchestrator 202A is similar to and adapted from the attestation routing orchestrator 104 in FIG.1.

The source node 202 further includes one or more CPUs 202B. In various implementations, the one or more CPUs 202B provide processing resources for generating a plurality of confidence scores for the corresponding plurality of candidate next-hop nodes 108A-108N. In various implementations, the one or more CPUs 202B provide processing resources for selecting a particular confidence score from the plurality of confidence scores that satisfies one or more selection criteria.

The source node 202 further includes a memory 202C. In various implementations, the memory 202C corresponds to a non-transitory memory, such as RAM, ROM, etc. In some implementations, the memory 202C stores the data packet destined for the destination node 116. In some implementations, the memory 202C stores a trusted image vector obtained from the trusted system 106. In some implementations, the memory 202C stores a first plurality of attestation vectors obtained from the corresponding plurality of candidate next-hop nodes 108A-108N and optionally a second plurality of attestation vectors obtained from the corresponding plurality of candidate second hop nodes 110A-110N. The source node 202 further includes a network interface 202D for obtaining, receiving, and transmitting the aforementioned data packets and vectors.

In one or more implementations, the source node 202 selects, and directs a data packet to a particular candidate next-hop node based the trusted image vector and the first plurality of attestation vectors.

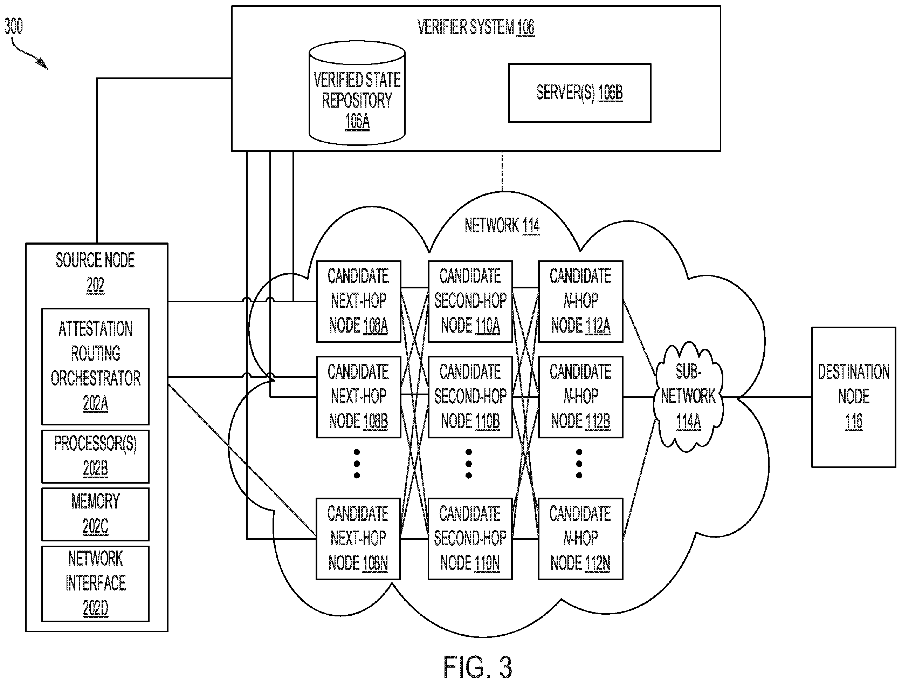

FIG.3 is a block diagram of an example of a networking environment 300 in accordance with some implementations. Notably, in contrast to the networking environment 100 illustrated in FIG.1 and the networking environment 200 in FIG.2, in the networking environment 300 a particular one of the plurality of candidate next-hop nodes 108A-108N relays a trusted image vector from the trusted system 106 to the source node 202. In various implementations, the attestation routing orchestrator 202A is similar to and adapted from the attestation routing orchestrator 104 in FIG.1.

In some implementations, the trusted system 106 signs the trusted image vector and provides the signed trusted image vector to the particular candidate next hop node, which in turn provides the signed trusted image vector to the source node 202. In some implementations, having the particular candidate next hop node provide the signed trusted image vector reduces attestation time (e.g., the time to determine trustworthiness of the particular candidate next hop node) because the source node 202 need not contact a remote node (trusted system 106). In some implementations, attestation time is further reduced because a single attestation process (e.g., the trusted system 106 signing the trusted image vector) facilitates the attesting of multiple source nodes. In other words, trusted image vectors need not be generated and evaluated on a per source node basis. Moreover, in implementations in which the source node 202 is not connected to the trusted system 106 (e.g., link down), obtaining the trusted image vector from the particular candidate next hop provides an alternative mechanism for node attestation. In some implementations, the trusted system 106 appends a time-stamped response to the trusted image vector as part of the signing process, sometimes referred to as stapling. Consequently, the source node 202 need not contact the trusted system 106 in order to attest a particular candidate next hop node.

FIG.4 is a block diagram of controller orchestrated attestation based routing 400 in accordance with some implementations. In various implementations, the source node 402 is similar to and adapted from the source node 102 in FIG.1. As illustrated in FIG.4, the attestation routing orchestrator 104 is separate from but coupled (e.g., connected) to the source node 402. In various implementations, the attestation routing orchestrator 104 corresponds to a controller with knowledge of the network that includes the plurality of candidate next-hop nodes and optionally the plurality of candidate second-hop nodes. For example, in some implementations, the attestation routing orchestrator 104 corresponds to a network management system (NMS). As another example, in some implementations, the attestation routing orchestrator 104 corresponds to an intent-based networking system, such as Cisco's digital network architecture (DNA). As yet another example, in some implementations, the attestation routing orchestrator 104 corresponds to a wireless LAN controller (WLC), while the plurality of candidate next-hop nodes 108A-108N and optionally the plurality of candidate second to N^{th} hop nodes (e.g., nodes 110A-110N, ..., 112A-112N as shown in FIGs. 1-3) correspond to networking devices (e.g., access points, user devices, etc.)

The attestation routing orchestrator 104 obtains, according to a predefined protocol, a first plurality of attestation vectors from the plurality of candidate next-hop nodes 108A-108N. Each of the plurality of candidate next-hop nodes 108A-108N is included within a respective route between the source node 402 and a destination node. In various implementations, the respective routes are independent of each other.

The attestation routing orchestrator 104 determines a plurality of confidence scores. Each of the plurality of confidence scores is based on a comparison between a corresponding one of the first plurality of attestation vectors and a trusted image vector. In various implementations, the attestation routing orchestrator 104 obtains the trusted image vector from the trusted system 106.

In various implementations, the attestation routing orchestrator 104 obtains, according to the predefined protocol, a second plurality of attestation vectors from a corresponding plurality of candidate second-hop nodes. Each of the plurality of candidate second-hop nodes is included within a respective route between a corresponding one of the plurality of candidate next-hop nodes 108A-108N and the destination node. According to these implementations, each of the plurality of confidence scores is additionally based on a comparison between a corresponding one of the second plurality of attention vectors and the trusted image vector in combination with the comparison between the corresponding one of the first plurality of attestation vectors and the trusted image vector.

The attestation routing orchestrator 104 selects, from the plurality of confidence scores, a particular confidence score that satisfies one or more selection criteria. The particular confidence score is associated with a particular candidate next-hop node of the plurality of candidate next-hop nodes 108A-108N.

As noted previously, certification/verification programs such as those offered by the Linux Foundation and used for Open Networking Automation Platform (ONAP) and Open Platform for Network Function Virtualization (OPNFV), offer self-certification of products. For example, a vendor uses a set of test tools/a test suite to test one or more products. The results of these tests are submitted to the verifier (e.g. Linux Foundation) and in case the results match the criteria, Linux Foundation issues a stamp of approval (which is just a sticker, i.e. isn't an electronic certificate which anyone could verify).

Currently, the verifier (e.g. the Linux Foundation), isn't able to verify whether the verification has been performed on untampered hardware and software - which is a pre-requisite for proper verification of test results. Without such verification, the underlying test system could be modified to enable the system under test deliver the required/desired results. In other words, by only receiving the test results, the verifier is unable to assess whether the test was in fact executed on the hardware/software as claimed or that the test results were fabricated.

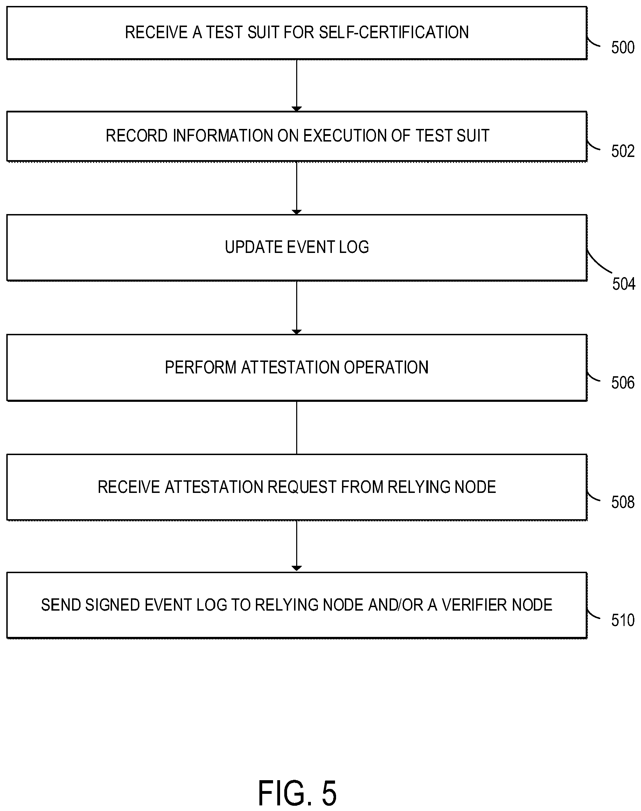

A process for ensuring trustworthiness (verifying) remote self-certifications for various network hardware and software components will be described below with reference to FIG.5. This is an example process that can be implemented at a given network component (e.g., any one of source node 102, any one of candidate next hop nodes 108A-108N, second hop nodes 110A-110N, ..., N^{th} hop nodes 112A-112N, destination node 116, etc., as described above with reference to FIG. 1). The process includes receiving at any given target network component (hardware or software) a set of defined base software and test suite(s) that includes a trust module. The trust module (e.g., a TPM described above and executed by a cryptoprocessor such as, for example, one of processors 202B of source node 202 of FIG.2) may produce attestation information including test system setup, the tested component's test results (e.g., hash measurements) and the test results. The attestation information may then be provided to a verifier (e.g., attestation routing orchestrator 104 running on a relying (requesting) node that is attempting to communicate with the target network component) to indicate and prove that the claimed tested component was in fact tested against identified test suite(s) and passed the required test thus indicating trustworthiness of the target network component.

Accordingly, the present disclosure eliminates the need for such verifier/ verifier node (e.g., Linux Foundation) to perform test-suite runs on various network hardware and software components for certification. In other words, the self-certification process of the present disclosure performed by network hardware and software components themselves is trustworthy.

FIG. 5 describes a process for ensuring trustworthiness of remote certifications for various network hardware and software components in accordance with various embodiments. FIG. 5 will be described from perspective of destination node 116 of FIGs. 1-3, which may also be referred to as a consumer node. It should be understood that destination node 116 may have the same components (e.g., attestation routing orchestrator, processor(s)/cryptoprocessor(s), memory(s) and network interface(s)) in the same manner as described above with reference to source node(s) 102/202 in FIGs. 1 and 2. Destination node 116 may have one or more executable computer-readable instructions stored on a memory that can be executed by one or more processors to implement steps of FIG.5, described below.

At S500, destination node 116 receives (e.g., at TPM running on a processor such as processor 202B) computer-readable codes for execution. Such computer-readable codes can include, but are not limited to, mutable software components that can load software and configuration and inventory data into destination node 116. One example of such mutable software component is a test suite (e.g., a software based self-certification/verification test executed on destination node 116) for self-verifying and self-certification by destination node 116. Such test suite may be a set of Dovetail tools used for self-verification with integrity measurement architecture enabled or Grub2 with TPM extensions enabled provided by a certification authority (e.g., Linux foundation) and may be defined as a set of hardware, base software and Test Suite that will compose a valid self-certification system including a trust module (e.g., TPM).

At S502, destination node 116 records information on execution of mutable software component received at S500 (record self-certification results on execution of test suite). In one example, results of the self-certification may indicate failure or success of running the test suite against a piece of hardware and/or software running on destination node 116. Such failure or success may be determined based on comparison of the results to known success and failure indicators provided by certification authority and received at S500.

As part of the this recording of results at S502, destination node 116 may gather information about the execution such as configuration data (and/or inventory data) of destination node 116, test setup, hash measurements of the test component (e.g., software or hardware), results of running the test suite, credentials of the system (destination node 116) and the test suite provided as Concise Software Identification Tags (co-SWIDs), response time of the hardware, hardware jumper settings, extension cards, successful execution state of the software, execution time information (e.g., using TPM's reboot and reset counters as well as recorded time ticks), etc. In example of Grub2 with TPM extension, information at S502 may be obtained by running a TPM2_Quote operation that includes TPM PCR values.

At S504, destination node 116 updates an event log in TPM with information. In one example, the event log represents a chain of recorded events. In one example, the event log may be updated at every preset time interval (where such time interval may be a configurable parameter determined based on experiments and/or empirical studies an can be, for example, once a day, once every week, once every 30 days, etc.) or may be updated as soon as an instance of a mutable software program is executed on destination node 116.

In conjunction with IMAs Event Log (e.g., a log that provides unalterable information leading to TPM PCRs), event log updated at S504 provides a proof of system state in terms of the events leading to that state. If this time information is relative to the system, a synchronization token may be provided as well. In case of the TPM, such synchronization token can be either a TPM2_Quote with a TSP timestamp hashed as nonce with a TPM2_Quote hashed as a nonce or a TSP timestamp of a TPM2_Quote of a TSP timestamp.

At S506, TPM running on a processor performs an attestation operation to produce a signed record of the event log. In one example, performing the attestation operation includes digitally signing the event log using a private key known to TPM and TPM's AK certificate. At this stage, destination node 116 can be said to have self-certified itself.

At S508, destination node 116 may receive an attestation request from a relying node (e.g., a neighboring or requesting node such as source node 102/202, one or more of next hop nodes 108A-108N, etc.). Such attestation request may be for purposes of authenticating and ensuring that the destination node 116 is a reliable node before communicating with the source node 202.

At S510, destination node 116 may send the signed record of the event log to the relying node and/or a verifier node using any known or to be developed communication method between destination node 116 and the relying node. Thereafter, the relying node would validate that destination node 116 (e.g., using the AK certificate that may be the same as the AK certificate used by destination node 116 to digitally sign the event log) is compliant with the certificate authorities requirements (e.g., as set by Linux foundation) and that the correct test suite was executed by verifying those elements of the event log against reference values/(Co)SWIDs of the certificate authority. The relying node would then verify the hash measurement of the self-certified programs against the event log of the self-certificate and validate the successful execution in the event log. This process may be performed by, for example, attestation routing orchestrator 104 of FIG. 1 or attestation routing orchestrator 202A of source node 202 (which may also be referred to as a producer node). Thus, the relying node can trust the self-certification of destination node 116 similarly to an execution by itself, with the exception of hardware or software attacks circumventing the assumptions of completeness and correctness of the event log recording.

As noted, the signed record of the event log may also be sent to a verifier node (e.g., Linux foundation) mentioned above, from which the computer-executable code for self-certifying is received from the verifier node is received at S500. As mentioned above, the verifier need not perform a process for verifying the digital proof of authenticity is the digital proof is itself trustworthy.

While process of FIG. 5 is described from the perspective of destination node 116, the same process can be performed at any other network node such as source node 102/202, any one or more next hop nodes 108A-108N, second hop nodes 110A-110N,...,N^{th} hop nodes 112A-112N, etc.

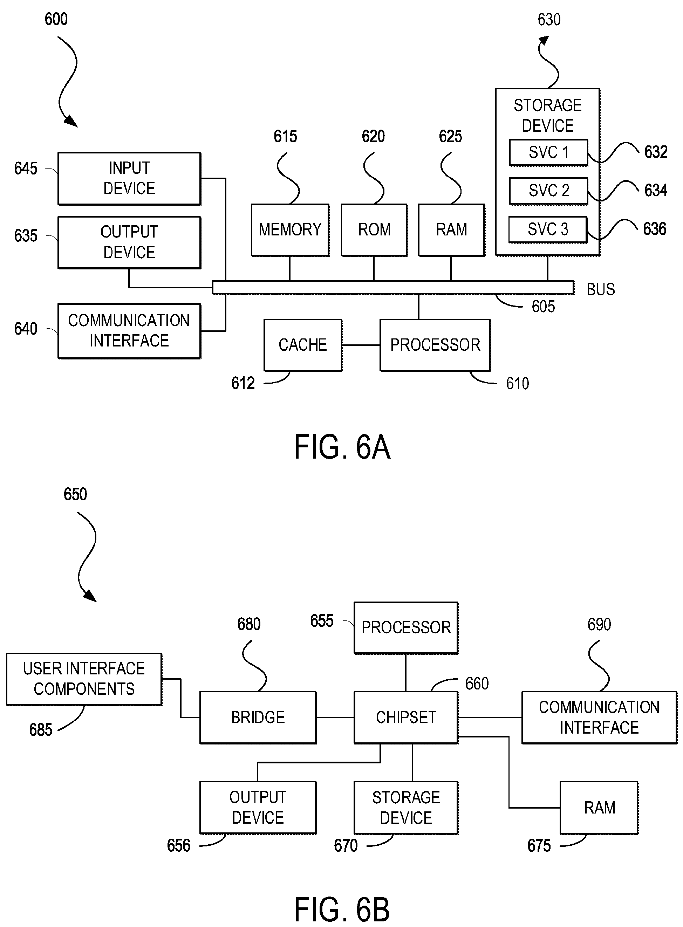

FIGs. 6A and 6B illustrate systems in accordance with various embodiments. The more appropriate system will be apparent to those of ordinary skill in the art when practicing the various embodiments. Persons of ordinary skill in the art will also readily appreciate that other systems are possible.

FIG.6A illustrates an example of a bus computing system 600 wherein the components of the system are in electrical communication with each other using a bus 605. The computing system 600 can include a processing unit (CPU or processor) 610 and a system bus 605 that may couple various system components including the system memory 615, such as read only memory (ROM) 620 and random access memory (RAM) 625, to the processor 610. The computing system 600 can include a cache 612 of high-speed memory connected directly with, in close proximity to, or integrated as part of the processor 610. The computing system 600 can copy data from the memory 615, ROM 620, RAM 625, and/or storage device 630 to the cache 612 for quick access by the processor 610. In this way, the cache 612 can provide a performance boost that avoids processor delays while waiting for data. These and other modules can control the processor 610 to perform various actions. Other system memory 615 may be available for use as well. The memory 615 can include multiple different types of memory with different performance characteristics. The processor 610 can include any general purpose processor and a hardware module or software module, such as services (SVC) 1 632, SVC 2 634, and SVC 3 636 stored in the storage device 630, configured to control the processor 610 as well as a special-purpose processor where software instructions are incorporated into the actual processor design. The processor 610 may essentially be a completely self-contained computing system, containing multiple cores or processors, a bus, memory controller, cache, etc. A multi-core processor may be symmetric or asymmetric.

To enable user interaction with the computing system 600, an input device 645 can represent any number of input mechanisms, such as a microphone for speech, a touch-protected screen for gesture or graphical input, keyboard, mouse, motion input, speech and so forth. An output device 635 can also be one or more of a number of output mechanisms known to those of skill in the art. In some instances, multimodal systems can enable a user to provide multiple types of input to communicate with the computing system 600. The communications interface 640 can govern and manage the user input and system output. There may be no restriction on operating on any particular hardware arrangement and therefore the basic features here may easily be substituted for improved hardware or firmware arrangements as they are developed.

The storage device 630 can be a non-volatile memory and can be a hard disk or other types of computer readable media which can store data that are accessible by a computer, such as magnetic cassettes, flash memory cards, solid state memory devices, digital versatile disks, cartridges, random access memory, read only memory, and hybrids thereof.

As discussed above, the storage device 630 can include the software SVCs 632, 634, 636 for controlling the processor 610. Other hardware or software modules are contemplated. The storage device 630 can be connected to the system bus 605. In some embodiments, a hardware module that performs a particular function can include a software component stored in a computer-readable medium in connection with the necessary hardware components, such as the processor 610, bus 605, output device 635, and so forth, to carry out the function.

FIG.6B illustrates an example architecture for a chipset computing system 650 that can be used in accordance with an embodiment. The computing system 650 can include a processor 655, representative of any number of physically and/or logically distinct resources capable of executing software, firmware, and hardware configured to perform identified computations. The processor 655 can communicate with a chipset 660 that can control input to and output from the processor 655. In this example, the chipset 660 can output information to an output device 665, such as a display, and can read and write information to storage device 670, which can include magnetic media, solid state media, and other suitable storage media. The chipset 660 can also read data from and write data to RAM 675. A bridge 680 for interfacing with a variety of user interface components 685 can be provided for interfacing with the chipset 660. The user interface components 685 can include a keyboard, a microphone, touch detection and processing circuitry, a pointing device, such as a mouse, and so on. Inputs to the computing system 650 can come from any of a variety of sources, machine generated and/or human generated.

The chipset 660 can also interface with one or more communication interfaces 690 that can have different physical interfaces. The communication interfaces 690 can include interfaces for wired and wireless LANs, for broadband wireless networks, as well as personal area networks. Some applications of the methods for generating, displaying, and using the technology disclosed herein can include receiving ordered datasets over the physical interface or be generated by the machine itself by the processor 655 analyzing data stored in the storage device 670 or the RAM 675. Further, the computing system 650 can receive inputs from a user via the user interface components 685 and execute appropriate functions, such as browsing functions by interpreting these inputs using the processor 655.

It will be appreciated that computing systems 600 and 650 can have more than one processor 610 and 655, respectively, or be part of a group or cluster of computing devices networked together to provide greater processing capability.

For clarity of explanation, in some instances the various embodiments may be presented as including individual functional blocks including functional blocks comprising devices, device components, steps or routines in a method embodied in software, or combinations of hardware and software.

In some example embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Some examples of such form factors include general purpose computing devices such as servers, rack mount devices, desktop computers, laptop computers, and so on, or general purpose mobile computing devices, such as tablet computers, smart phones, personal digital assistants, wearable devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" a set indicates that one member of the set or multiple members of the set satisfy the claim. For example, claim language reciting "at least one of A and B" means A, B, or A and B.

## Claims

1. A method comprising:
receiving (500), at a network node (116; 102; 202; 108A-108N; 110A-110N; 112A-112N), computer-executable code for self-certifying a software and/or a hardware of the network node or at least a component thereof;
executing (502), at the network node, the computer-executable code to obtain self-certification results;
updating (504), at a trust module of the network node, an event log with the self-certification results;
performing (506), by the network node, an attestation of the event log to generate a digital proof of authenticity of the network node; and
sending (510), by the network node, the digital proof of authenticity to a requesting node, the digital proof of authenticity enabling the requesting node to verify the network node prior to communication with the network node.

2. The method of claim 1, wherein the self-certification results includes configuration and inventory data of network device, self-certification test setup, hash measurements of the self-certification test, results of running the self-certification test, credentials of both, the network node and the self-certification test, and execution time information of the self-certification test.

3. The method of claim 2, wherein the credentials of both, the network node and the self-certification test are provided as Concise Software Identification Tags, co-SWIDs.

4. The method of any one of claims 1 to 3, further comprising:
receiving (508), at the network node, an attestation request from the requesting node; wherein, as an option, upon receiving the digital proof of authenticity, the requesting node is configured to verify the digital proof of authenticity using a certificate known to the requesting node and the network node.

5. The method of any one of claims 1 to 4, wherein performing the attestation includes digitally signing the event log using a private key and a certificate known to the trust module.

6. The method of any one of claims 1 to 5, further comprising:
sending the digital proof of authenticity to a verifier node, wherein
the computer-executable code for self-certifying is received from the verifier node, and
the verifier node does not perform a process for verifying the digital proof of authenticity.

7. A network node (116; 102; 202; 108A-108N; 110A-110N; 112A-112N) comprising:
memory having computer-readable instructions stored therein; and
one or more processors configured to execute the computer-readable instructions to:
receive computer-executable code for self-certifying a software and/or a hardware of the network node or at least a component thereof;
execute the computer-executable code to obtain self-certification results;
update, at a trust module of the network node, an event log with the self-certification results;
perform an attestation of the event log to generate a digital proof of authenticity of the network node; and
send the digital proof of authenticity to a requesting node, the digital proof of authenticity enabling the requesting node to verify the network node prior to communication with the network node.

8. The network node of claim 7, wherein the self-certification results includes configuration and inventory data of network device, self-certification test setup, hash measurements of the self-certification test, results of running the self-certification test, credentials of both, the network node and the self-certification test, and execution time information of the self-certification test;
wherein, as an option, the credentials of both, the network node and the self-certification test are provided as Concise Software Identification Tags, co-SWIDs.

9. The network node of any one of claims 7 or 8, wherein the one or more processors are configured to execute the computer-readable instructions to:
receive an attestation request from the requesting node; wherein, as an option, upon receiving the digital proof of authenticity, the requesting node is configured to verify the digital proof of authenticity using a certificate known to the requesting node and the network node.

10. The network node of any one of claims 7 to 9, wherein performing the attestation includes digitally signing the event log using a private key and a certificate known to the trust module; and, optionally,
wherein the one or more processors are configured to execute the computer-readable instructions to:
send the digital proof of authenticity to a verifier node, wherein
the computer-executable code for self-certifying is received from the verifier node, and
the verifier node does not perform a process for verifying the digital proof of authenticity.

11. One or more non-transitory computer-readable media comprising computer-readable instructions, which when executed by one or more processors of a network node, cause the network node to:
receive computer-executable code for self-certifying a software and/or a hardware of the network node or at least a component thereof;
execute the computer-executable code to obtain self-certification results;
update, at a trust module of the network node, an event log with the self-certification results;
perform an attestation of the event log to generate a digital proof of authenticity of the network node; and
send the digital proof of authenticity to a requesting node, the digital proof of authenticity enabling the requesting node to verify the network node prior to communication with the network node.

12. The one or more non-transitory computer-readable media of claim 11, wherein the self-certification results includes configuration and inventory data of network device, self-certification test setup, hash measurements of the self-certification test, results of running the self-certification test, credentials of both, the network node and the self-certification test, and execution time information of the self-certification test;
wherein, as an option, the credentials both, of the network node and the self-certification test are provided as Concise Software Identification Tags, co-SWIDs.

13. The one or more non-transitory computer-readable media of any one of claims 11 or 12, wherein execution of the computer-readable instructions by the one or more processor further cause the network node to:
receive an attestation request from the requesting node; wherein, as an option, upon receiving the digital proof of authenticity, the requesting node is configured to verify the digital proof of authenticity using a certificate known to the requesting node and the network node.

14. The one or more non-transitory computer-readable media of any one of claims 11 to 13, wherein performing the attestation includes digitally signing the event log using a private key and a certificate known to the trust module.

15. The one or more non-transitory computer-readable media of any one of claims 11-14, wherein the execution of the computer-readable instructions by the one or more processors, further cause the network node to:
send the digital proof of authenticity to a verifier node, wherein
the computer-executable code for self-certifying is received from the verifier node, and
the verifier node does not perform a process for verifying the digital proof of authenticity.

## Patentansprüche

1. Ein Verfahren, das folgende Schritte aufweist:
Empfangen (500), an einem Netzwerkknoten (116; 102; 202; 108A-108N; 110A-110N; 112A-112N), von computerausführbarem Code zum Selbstzertifizieren einer Software und/oder einer Hardware des Netzwerkknotens oder zumindest einer Komponente davon;
Ausführen (502), an dem Netzwerkknoten, des computerausführbaren Codes, um Selbstzertifizierungsergebnisse zu erhalten;
Aktualisieren (504), an einem Vertrauensmodul des Netzwerkknotens, eines Ereignisprotokolls mit den Selbstzertifizierungsergebnissen;
Durchführen (506), durch den Netzwerkknoten, einer Beglaubigung des Ereignisprotokolls, um einen digitalen Authentizitätsnachweis des Netzwerkknotens zu erzeugen; und
Senden (510), durch den Netzwerkknoten, des digitalen Authentizitätsnachweises an einen anfordernden Knoten, wobei der digitale Authentizitätsnachweis es dem anfordernden Knoten ermöglicht, den Netzwerkknoten vor einer Kommunikation mit dem Netzwerkknoten zu verifizieren.

2. Das Verfahren gemäß Anspruch 1, wobei die Selbstzertifizierungsergebnisse Konfigurations- und Bestandsdaten einer Netzwerkvorrichtung, eine Selbstzertifizierungstesteinrichtung, Hash-Messungen des Selbstzertifizierungstests, Ergebnisse des Ausführens des Selbstzertifizierungstests, Berechtigungsnachweise sowohl des Netzwerkknotens als auch des Selbstzertifizierungstests und Ausführungszeitinformationen des Selbstzertifizierungstests umfassen.

3. Das Verfahren gemäß Anspruch 2, wobei die Berechtigungsnachweise sowohl des Netzwerkknotens als auch des Selbstzertifizierungstests als Concise Software Identification Tags, co-SWIDs, bereitgestellt werden.

4. Das Verfahren gemäß einem der Ansprüche 1 bis 3, das ferner folgende Schritte aufweist:
Empfangen (508), an dem Netzwerkknoten, einer Beglaubigungsanforderung von dem anfordernden Knoten;
wobei, als eine Option, auf das Empfangen des digitalen Authentizitätsnachweises hin, der anfordernde Knoten dazu konfiguriert ist, den digitalen Authentizitätsnachweis unter Verwendung eines Zertifikats zu verifizieren, das dem anfordernden Knoten und dem Netzwerkknoten bekannt ist.

5. Das Verfahren gemäß einem der Ansprüche 1 bis 4, wobei das Durchführen der Beglaubigung ein digitales Signieren des Ereignisprotokolls unter Verwendung eines privaten Schlüssels und eines Zertifikats umfasst, die dem Vertrauensmodul bekannt sind.

6. Das Verfahren gemäß einem der Ansprüche 1 bis 5, das ferner folgende Schritte aufweist:
Senden des digitalen Authentizitätsnachweises an einen Verifiziererknoten, wobei
der computerausführbare Code zum Selbstzertifizieren von dem Verifiziererknoten empfangen wird, und
der Verifiziererknoten keinen Prozess zum Verifizieren des digitalen Authentizitätsnachweises durchführt.

7. Ein Netzwerkknoten (116; 102; 202; 108A-108N; 110A-110N; 112A-112N), der folgende Merkmale aufweist:
einen Speicher mit darin gespeicherten computerlesbaren Anweisungen; und
einen oder mehrere Prozessoren, die dazu konfiguriert sind, die computerlesbaren Anweisungen auszuführen zum:
Empfangen von computerausführbarem Code zum Selbstzertifizieren einer Software und/oder einer Hardware des Netzwerkknotens oder zumindest einer Komponente davon;
Ausführen des computerausführbaren Codes, um Selbstzertifizierungsergebnisse zu erhalten;
Aktualisieren, an einem Vertrauensmodul des Netzwerkknotens, eines Ereignisprotokolls mit den Selbstzertifizierungsergebnissen;
Durchführen einer Beglaubigung des Ereignisprotokolls, um einen digitalen Authentizitätsnachweis des Netzwerkknotens zu erzeugen; und
Senden des digitalen Authentizitätsnachweises an einen anfordernden Knoten, wobei der digitale Authentizitätsnachweis es dem anfordernden Knoten ermöglicht, den Netzwerkknoten vor einer Kommunikation mit dem Netzwerkknoten zu verifizieren.

8. Der Netzwerkknoten gemäß Anspruch 7, wobei die Selbstzertifizierungsergebnisse Konfigurations- und Bestandsdaten einer Netzwerkvorrichtung, eine Selbstzertifizierungstesteinrichtung, Hash-Messungen des Selbstzertifizierungstests, Ergebnisse des Ausführens des Selbstzertifizierungstests, Berechtigungsnachweise sowohl des Netzwerkknotens als auch des Selbstzertifizierungstests und Ausführungszeitinformationen des Selbstzertifizierungstests umfassen;
wobei, als eine Option, die Berechtigungsnachweise sowohl des Netzwerkknotens als auch des Selbstzertifizierungstests als Concise Software Identification Tags, co-SWIDs, bereitgestellt werden.

9. Der Netzwerkknoten gemäß einem der Ansprüche 7 oder 8, wobei der eine oder die mehreren Prozessoren dazu konfiguriert sind, die computerlesbaren Anweisungen auszuführen zum:
Empfangen einer Beglaubigungsanforderung von dem anfordernden Knoten;
wobei, als eine Option, auf das Empfangen des digitalen Authentizitätsnachweises hin, der anfordernde Knoten dazu konfiguriert ist, den digitalen Authentizitätsnachweis unter Verwendung eines Zertifikats zu verifizieren, das dem anfordernden Knoten und dem Netzwerkknoten bekannt ist.

10. Der Netzwerkknoten gemäß einem der Ansprüche 7 bis 9, wobei das Durchführen der Beglaubigung ein digitales Signieren des Ereignisprotokolls unter Verwendung eines privaten Schlüssels und eines Zertifikats umfasst, die dem Vertrauensmodul bekannt sind;
und, optional,
wobei der eine oder die mehreren Prozessoren dazu konfiguriert sind, die computerlesbaren Anweisungen auszuführen zum:
Senden des digitalen Authentizitätsnachweises an einen Verifiziererknoten, wobei
der computerausführbare Code zum Selbstzertifizieren von dem Verifiziererknoten empfangen wird, und
der Verifiziererknoten keinen Prozess zum Verifizieren des digitalen Authentizitätsnachweises durchführt.

11. Ein oder mehrere nichtflüchtige computerlesbare Medien, die computerlesbare Anweisungen aufweisen, die, wenn dieselben durch einen oder mehrere Prozessoren eines Netzwerkknotens ausgeführt werden, den Netzwerkknoten veranlassen zum:
Empfangen von computerausführbarem Code zum Selbstzertifizieren einer Software und/oder einer Hardware des Netzwerkknotens oder zumindest einer Komponente davon;
Ausführen des computerausführbaren Codes, um Selbstzertifizierungsergebnisse zu erhalten;
Aktualisieren, an einem Vertrauensmodul des Netzwerkknotens, eines Ereignisprotokolls mit den Selbstzertifizierungsergebnissen;
Durchführen einer Beglaubigung des Ereignisprotokolls, um einen digitalen Authentizitätsnachweis des Netzwerkknotens zu erzeugen; und
Senden des digitalen Authentizitätsnachweises an einen anfordernden Knoten, wobei der digitale Authentizitätsnachweis es dem anfordernden Knoten ermöglicht, den Netzwerkknoten vor einer Kommunikation mit dem Netzwerkknoten zu verifizieren.

12. Das eine oder die mehreren nichtflüchtigen computerlesbaren Medien gemäß Anspruch 11, wobei die Selbstzertifizierungsergebnisse Konfigurations- und Bestandsdaten einer Netzwerkvorrichtung, eine Selbstzertifizierungstesteinrichtung, Hash-Messungen des Selbstzertifizierungstests, Ergebnisse des Ausführens des Selbstzertifizierungstests, Berechtigungsnachweise sowohl des Netzwerkknotens als auch des Selbstzertifizierungstests und Ausführungszeitinformationen des Selbstzertifizierungstests umfassen;
wobei, als eine Option, die Berechtigungsnachweise sowohl des Netzwerkknotens als auch des Selbstzertifizierungstests als Concise Software Identification Tags, co-SWIDs, bereitgestellt werden.

13. Das eine oder die mehreren nichtflüchtigen computerlesbaren Medien gemäß einem der Ansprüche 11 oder 12, wobei eine Ausführung der computerlesbaren Anweisungen durch den einen oder die mehreren Prozessoren ferner den Netzwerkknoten veranlassen zum:
Empfangen einer Beglaubigungsanforderung von dem anfordernden Knoten;
wobei, als eine Option, auf das Empfangen des digitalen Authentizitätsnachweises hin, der anfordernde Knoten dazu konfiguriert ist, den digitalen Authentizitätsnachweis unter Verwendung eines Zertifikats zu verifizieren, das dem anfordernden Knoten und dem Netzwerkknoten bekannt ist.

14. Das eine oder die mehreren nichtflüchtigen computerlesbaren Medien gemäß einem der Ansprüche 11 bis 13, wobei das Durchführen der Beglaubigung ein digitales Signieren des Ereignisprotokolls unter Verwendung eines privaten Schlüssels und eines Zertifikats umfasst, die dem Vertrauensmodul bekannt sind.

15. Das eine oder die mehreren nichtflüchtigen computerlesbaren Medien gemäß einem der Ansprüche 11 bis 14, wobei die Ausführung der computerlesbaren Anweisungen durch den einen oder die mehreren Prozessoren ferner den Netzwerkknoten veranlassen zum:
Senden des digitalen Authentizitätsnachweises an einen Verifiziererknoten, wobei
der computerausführbare Code zum Selbstzertifizieren von dem Verifiziererknoten empfangen wird, und
der Verifiziererknoten keinen Prozess zum Verifizieren des digitalen Authentizitätsnachweises durchführt.

## Revendications

1. Procédé, comprenant :
la réception (500), au niveau d'un nœud de réseau (116 ; 102 ; 202 ; 108A-108N ; 110A-110N ; 112A-112N), d'un code exécutable par ordinateur pour auto-certifier un logiciel et/ou un matériel du nœud de réseau ou d'au moins un composant de celui-ci ;
l'exécution (502), au niveau du nœud de réseau, du code exécutable par ordinateur pour obtenir des résultats d'auto-certification ;
la mise à jour (504), au niveau d'un module de confiance du nœud de réseau, d'un journal des événements avec les résultats de l'auto-certification ;
la réalisation (506), par le nœud de réseau, d'une attestation du journal des événements pour générer une preuve numérique de l'authenticité du nœud de réseau ; et
l'envoi (510), par le nœud de réseau, de la preuve numérique de l'authenticité à un nœud demandeur, la preuve numérique de l'authenticité permettant au nœud demandeur de vérifier le nœud de réseau avant de communiquer avec celui-ci.

2. Procédé selon la revendication 1, dans lequel les résultats de l'auto-certification comprennent des données de configuration et d'inventaire du dispositif réseau, la configuration du test d'auto-certification, les mesures de hachage du test d'auto-certification, les résultats de l'exécution du test d'auto-certification, les informations d'identification du nœud de réseau et du test d'auto-certification, et les informations relatives au temps d'exécution du test d'auto-certification.

3. Procédé selon la revendication 2, dans lequel les informations d'identification du nœud de réseau et du test d'auto-certification sont fournies sous forme de balises d'identification logicielle concises, co-SWID.

4. Procédé selon l'une quelconque des revendications 1 à 3, comprenant en outre :
la réception (508), au niveau du nœud de réseau, d'une demande d'attestation provenant du nœud demandeur ; dans lequel, en option, lors de la réception de la preuve numérique de l'authenticité, le nœud demandeur est configuré pour vérifier la preuve numérique de l'authenticité en utilisant un certificat connu du nœud demandeur et du nœud de réseau.

5. Procédé selon l'une quelconque des revendications 1 à 4, dans lequel l'exécution de l'attestation comprend la signature numérique du journal des événements en utilisant une clé privée et un certificat connu du module de confiance.

6. Procédé selon l'une quelconque des revendications 1 à 5, comprenant en outre :
l'envoie de la preuve numérique de l'authenticité à un nœud vérificateur, dans lequel le code exécutable par ordinateur pour l'auto-certification est reçu du nœud vérificateur, et
le nœud vérificateur n'effectue pas de processus de vérification de la preuve numérique de l'authenticité.

7. Nœud de réseau (116; 102; 202; 108A-108N ; 110A-110N ; 112A-112N) comprenant :
une mémoire contenant des instructions lisibles par ordinateur ; et
un ou des processeurs configurés pour exécuter les instructions lisibles par ordinateur pour :
recevoir un code exécutable par ordinateur pour auto-certifier un logiciel et/ou un matériel du nœud de réseau ou au moins un composant de celui-ci ;
exécuter le code exécutable par ordinateur pour obtenir les résultats de l'auto-certification ;
mettre à jour, au niveau d'un module de confiance du nœud du réseau, un journal des événements avec les résultats de l'auto-certification ;
effectuer une attestation du journal des événements pour générer une preuve numérique de l'authenticité du nœud de réseau ; et
envoyer la preuve numérique de l'authenticité à un nœud demandeur, la preuve numérique de l'authenticité permettant au nœud demandeur de vérifier le nœud de réseau avant de communiquer avec celui-ci.

8. Nœud de réseau selon la revendication 7, dans lequel les résultats de l'auto-certification comprennent des données de configuration et d'inventaire du dispositif réseau, la configuration du test d'auto-certification, les mesures de hachage du test d'auto-certification, les résultats de l'exécution du test d'auto-certification, les informations d'identification du nœud de réseau et du test d'auto-certification, et les informations relatives au temps d'exécution du test d'auto-certification ;
dans lequel, en option, les informations d'identification du nœud de réseau et du test d'auto-certification sont fournies sous forme de balises d'identification logicielle concises, co-SWID.

9. Nœud de réseau selon l'une quelconque des revendications 7 ou 8, dans lequel l'un ou les processeurs sont configurés pour exécuter les instructions lisibles par ordinateur pour :
recevoir une demande d'attestation provenant du nœud demandeur ;
dans lequel, en option, lors de la réception de la preuve numérique de l'authenticité, le nœud demandeur est configuré pour vérifier la preuve numérique de l'authenticité en utilisant un certificat connu du nœud demandeur et du nœud de réseau.

10. Nœud de réseau selon l'une quelconque des revendications 7 à 9, dans lequel l'exécution de l'attestation comprend la signature numérique du journal des événements en utilisant une clé privée et un certificat connu du module de confiance ;
et, éventuellement, dans lequel l'un ou les processeurs sont configurés pour exécuter les instructions lisibles par ordinateur pour :
envoyer la preuve numérique de l'authenticité à un nœud vérificateur, dans lequel le code exécutable par ordinateur pour l'auto-certification est reçu du nœud vérificateur, et
le nœud vérificateur n'effectue pas de processus de vérification de la preuve numérique de l'authenticité.

11. Un ou des supports informatiques non transitoires comprenant des instructions lisibles par ordinateur qui, lorsqu'elles sont exécutées par un ou des processeurs d'un nœud de réseau, amènent le nœud de réseau à :
recevoir un code exécutable par ordinateur pour auto-certifier un logiciel et/ou un matériel du nœud de réseau ou au moins un composant de celui-ci ;
exécuter le code exécutable par ordinateur pour obtenir les résultats de l'auto-certification ;
mettre à jour, au niveau d'un module de confiance du nœud du réseau, un journal des événements avec les résultats de l'auto-certification ;
effectuer une attestation du journal des événements pour générer une preuve numérique de l'authenticité du nœud de réseau ; et
envoyer la preuve numérique de l'authenticité à un nœud demandeur, la preuve numérique de l'authenticité permettant au nœud demandeur de vérifier le nœud de réseau avant de communiquer avec celui-ci.

12. L'un ou les supports informatiques non transitoires lisibles par ordinateur selon la revendication 11, dans lesquels les résultats de l'auto-certification comprennent des données de configuration et d'inventaire du dispositif réseau, la configuration du test d'auto-certification, les mesures de hachage du test d'auto-certification, les résultats de l'exécution du test d'auto-certification, les informations d'identification du nœud de réseau et du test d'auto-certification, et les informations relatives au temps d'exécution du test d'auto-certification ;
dans lesquels, en option, les informations d'identification du nœud de réseau et du test d'auto-certification sont fournies sous forme de balises d'identification logicielle concises, co-SWID.

13. L'un ou les supports informatiques non transitoires lisibles par ordinateur selon l'une quelconque des revendications 11 ou 12, dans lesquels l'exécution des instructions lisibles par ordinateur par le ou les processeurs amène en outre le nœud de réseau à :
recevoir une demande d'attestation provenant du nœud demandeur ;
dans lesquels, en option, lors de la réception de la preuve numérique de l'authenticité, le nœud demandeur est configuré pour vérifier la preuve numérique de l'authenticité en utilisant un certificat connu du nœud demandeur et du nœud de réseau.

14. L'un ou les supports informatiques non transitoires lisibles par ordinateur selon l'une quelconque des revendications 11 à 13, dans lesquels l'exécution de l'attestation comprend la signature numérique du journal des événements en utilisant une clé privée et un certificat connu du module de confiance.

15. L'un ou les supports informatiques non transitoires lisibles par ordinateur selon l'une quelconque des revendications 11 à 14, dans lesquels l'exécution des instructions lisibles par ordinateur par l'un ou les processeurs amène en outre le nœud de réseau à :
envoyer la preuve numérique de l'authenticité à un nœud vérificateur, dans lesquels le code exécutable par ordinateur pour l'auto-certification est reçu du nœud vérificateur, et
le nœud vérificateur n'effectue pas de processus de vérification de la preuve numérique de l'authenticité.
